# EUROPEAN PATENT APPLICATION

(11) **EP 3 242 220 A1**
(43) Date of publication of application: **08.11.2017**
(21) Application number: 15845632.7
(22) Date of filing: 30.09.2015
(51) Int. Cl.: G06F 17/27

(54) **INTELLIGENT PREDICTION INPUT METHOD AND SYSTEM**

(30) Priority: 30.09.2014 CN 201410522550
(71) Applicant: Shanghai Chule (CooTek) Information Technology Co., Ltd, Shanghai 200233 (CN)
(72) Inventor: ZHANG, Kan, Shanghai 200233 (CN); ZHOU, Zhaowen, Shanghai 200233 (CN); ZHAO, Tao, Shanghai 200233 (CN); DAI, Yun, Shanghai 200233 (CN); XIE, Haichao, Shanghai 200233 (CN)
(74) Representative: Kolster Oy Ab
(86) International application number: PCT/CN2015/091252
(87) International publication number: WO 2016/050214

(57) **Abstract**

An intelligent-predictable input method and an intelligent-predictable input system, wherein said method comprises: detecting an input signal; obtaining an input sequence according to said input signal, and based on said input signal, obtaining an input field selected by said input signal and associated attribute data of an application scenario that is corresponding to the input field; matching based on said input sequence and said associated attribute data, so as to obtain a matched candidate object. The present disclosure is aim to obtain an input result based on the consideration of the application scenario where said input is applied, so as to predict intelligently on a basis of an input sequence and acquire a candidate object that meets the user's expectation.

## Description

### Field of the Invention

The present disclosure relates to a field of the application of electronic products, and especially relates to an input method and an input system for performing intelligent prediction in a portable electronic apparatus.

### Background

Nowadays, portable electronic apparatus such as smart phone and tablet computer has become more and more popular. As a tool application, an input software application is applied in diverse application scenarios. For example, an input software application is in some cases required to be used in Short Message Service or Wechat to input texts; an input software application is in some cases required to be used to input an email address into an email address bar or input a telephone number into a contact number bar; an input software application is in some cases required to be used to input corresponding words or sentences into a search bar on a web page, enabling the search engine to perform a searching on a basis of the words or sentences; or, an input software application is in some cases required to be used to directly input a web link.

A conventional input software application usually provides only candidate words, according to user's inputs. In different application scenarios, the user has to add other additional applications in order to obtain an object beyond candidate words. For example, when a user intends to download some applications, the user firstly has to start an application platform software, for instance GooglePlay, and then click in the search bar of GooglePlay, so as to select the search bar; a certain input software application installed in the device is activated upon the selection of the search bar, and then, the input software detects user's inputs, and provides candidate words according to the inputs. When a selection of a candidate word is detected, the input software application further outputs the selected candidate word to the search bar of GooglePlay. After that, a search program, defined by GooglePlay and independent with the input software application, based on the selected word is conducted and leads to a corresponding search consequence. To obtain an expected object beyond candidate words, because the limitation of conventional input software applications, users have to add extra operation steps or invoke different applications. Thus, it makes the operation more complexed.

In view of above factors, a more intelligent input application for directly predicting an expected object through a user's inputs, without extra steps of searching using other applications, is desired.

### Summary of the Invention

The present disclosure is to provide a more intelligent input method and system, capable of performing an intelligent prediction directly based on an input sequence of a user and obtaining more abundant expected object, not limited to candidate words..

According to one aspect of the present disclosure, there is provided an intelligent-predictable input system, comprising: an input device, for obtaining an input signal; a storage module, for storing one or more candidate objects and one or more data fields associated thereto, wherein said one or more data fields are adapted to describe a target subject indicated by the candidate object and relevant information of an application scenarios associated with the target subjects; a processing module, for receiving the input signal from the input device, obtaining, according to said input signal, an input sequence, an input field selected by said input signal and associated attribute data of an application scenario that is corresponding to the input field, and then based on said input sequence and said associated attribute data, filtering in the storage module to obtain one or more matched candidate objects; and a display device, for displaying the target subjects indicated by the matched candidate objects.

According to another aspect of the present disclosure, there is provided an intelligent-predictable input method, comprising: detecting an input signal; obtaining an input sequence according to said input signal, and based on said input signal, obtaining an input field selected by said input signal and associated attribute data of an application scenario that is corresponding to the input field; matching based on said input sequence and said associated attribute data, so as to obtain a candidate object. Furthermore, said candidate object is associated with one or more data fields and said one or more data fields are adapted to describe a target subject indicated by the candidate object and relevant information of an application scenario associated with the target subject.

Preferably, in such input method, the step of matching based on said input sequence and said associated attribute data comprises: filtering in one or more first specified data fields of candidate objects based on said input sequence, so as to obtain one or more matched candidate objects, wherein said first specified data field of the matched candidate object is adapted to describe relevant information of the target subject indicated by the corresponding candidate object or of the application scenario associated with the corresponding candidate object; filtering in the obtained candidate objects and excluding one or more candidate objects, wherein one or more second specified data fields of the excluded candidate object fail to match with said associated attribute data.

Preferably, in such input method, the step of matching based on said input sequence and said associated attribute data candidate object comprises: filtering in one or more third specified data fields according to said associated attribute data, so as to obtain one or more matched candidate objects, wherein said third specified data field of the matched candidate object is adapted to describe the relevant information of the target subject indicated by the corresponding candidate object or of the application scenario associated with the candidate object; filtering in one or more matched candidate objects based on said input sequence.

Preferably, the present disclosure further includes displaying said candidate objects and said candidate words at the same time.

Compared with the prior art, by using multiple data fields that are associated with a target subject and a corresponding application scenario, the present disclosure enables to provide a candidate object that can meet the user's expectation better or to implement a matching operation of the candidate object under designated environments only by using a single input software application, considering environmental factors when the user is inputting. Since a target subject corresponding to a candidate object can be a software program or a media file or an associated link or a content-based web link, inputs by the user are not limited to a specific application scenario and thus the input results are generally suitable for any application scenarios. As a result, it leads to an improvement of user's input experience. Furthermore, the present disclosure applies multiple data fields of the candidate objects to keep records of candidate objects and the associated application scenario, so that the matching of the candidate objects can be realized without further steps of installing/uninstalling the cell thesaurus or steps of removing the redundancies, thus the inputting efficiency is enhanced and the electricity consumption is reduced.

### Brief Description of the Drawings

By reading following detailed description of non-limiting embodiments with reference to the accompany figures, other features, objects and advantages of the present disclosure will become more obvious:
Figure 1 is a structural schematic diagram of an embodiment of an intelligent-predictable input system according to the present disclosure.
Figure 2 is a schematic diagram of individual data fields for storing an embodiment of the candidate object in the intelligent-predictable input system according to the present disclosure.
Figure 3 and Figure 4 are layout schematic diagrams of embodiments of the keyboard area in the intelligent-predictable input system according to the present disclosure.
Figure 5 to Figure 8 are schematic diagrams of interfaces used in embodiments of the intelligent-predictable input system according to the present disclosure.
Figure 9 is a schematic diagram of the setting layout of the target subject display area when the keyboard in a retracted state in the intelligent-predictable input system according to the present disclosure.
Figure 10 is a flowchart schematic diagram of an embodiment of an intelligent-predictable input method according to the present disclosure.
Figure 11 is a flowchart schematic diagram of another embodiment of an intelligent-predictable input method according to the present disclosure.
Figure 12 to Figure 13 are schematic diagrams of interfaces used in embodiments of the intelligent-predictable input system according to the present disclosure.
Figure 14 is a flowchart schematic diagram of another embodiment of an intelligent-predictable input system according to the present disclosure.
Figure 15 is a structural schematic diagram of another embodiment of an intelligent-predictable input system according to the present disclosure.
Figure 16 is a flowchart schematic diagram of another embodiment of an intelligent-predictable input system according to the present disclosure.

### Detailed Description of the Preferred Embodiments

Reference will now be made in detail to exemplary embodiments, examples of which are illustrated in the accompanying drawings. When appropriate, the same reference numbers are used throughout the drawings to refer to the same or like parts. The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein.

All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention. Although several exemplary embodiments and features of the present disclosure will be described in the following, without departing form the inventive concept of the present disclosure, amendments, adjustments and other alternative implementations of the present disclosure (e.g. equivalent replacement, addition or modification of components shown in the accompany figures; or replacement, reordering or addition of steps) should not be considered as limits of the present disclosure. The scope of the present disclosure is defined by the appended claims.

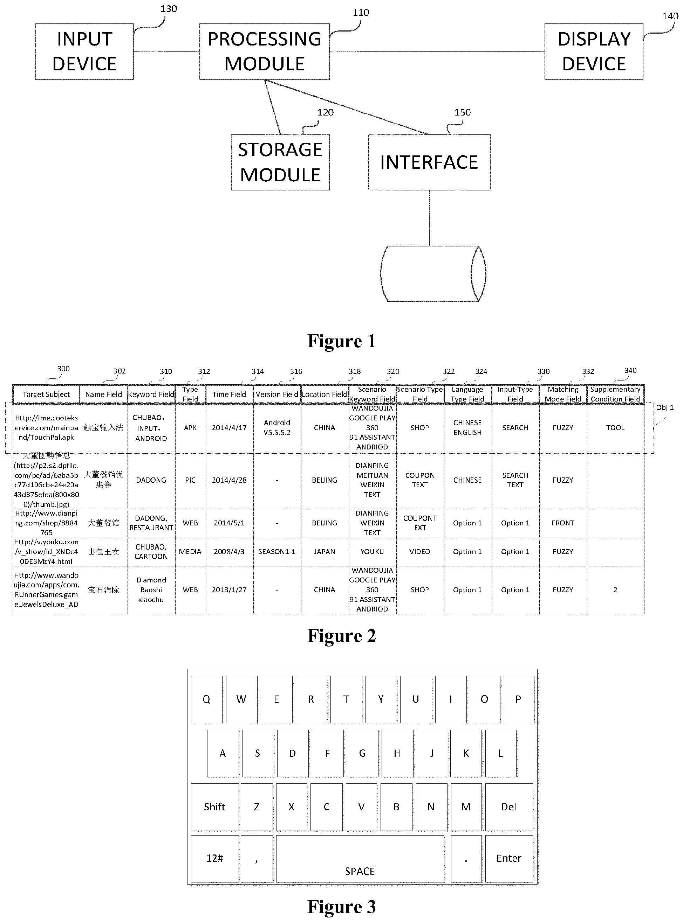

Figure 1 is a schematic diagram illustrating an exemplary system 100 for processing intelligent-predictable input operations. According to some embodiments, the system 100 may be a portable communication apparatus that can be brought to any position as a user likes, such as mobile phone, smart phone or PDA. The system 100 can be connected to telecommunication network including telephone network (e.g. 3G network) and/or Internet (e.g. Wi-Fi/TM). According to some embodiments, the system 100 can be configured so that when it is applied to different application scenarios, the application scenario itself is combined with contents input by a user, and as a result, the candidate object, that is associated with the application scenario and is matched with the attribute of the application scenario, is obtained by the intelligent prediction.

According to the embodiments of the present disclosure, target subject may be, provided by the application scenario, a picture, a document, a media file, an executable program or a web page file. For example, it may be an application software or a link of a file provided in an platform software installed on a portable mobile apparatus, such as an audio file provided by Baidu Music APP (similar with exfm APP), or an application software provided by WanDouJia APP Store (similar with GooglePlay APP). Also, it may be an application software that is associated with the current application scenario according to the system setting or the user setting; e.g., when the user performs inputting operations in SohuNews APP, the target subject can be either a link of news that appears in SohuNews APP or even in other news apps e.g.NetEase News APP, or a link for downloading SohuNews APP or other news apps e.g. Sina News APP. Again, for example, when the text "Spice Spirit" (the name of a Chinese restaurant) is brought up at the time when the user is inputting a SMS or Wechat text, the target subject may also be group purchase or discount information of "Spice Spirit" restaurant or a corresponding news link associated with "Spice Spirit" restaurant, or a link for downloading a client-terminal application software provided by "Spice Spirit" restaurant. For another example, when the word "twitter" is brought up at the time when the user is using Facebook, the target subject can be the user's twitter homepage, for example, a screen shot or a link of his twitter homepage. In some embodiments, the target subject may be a Uniform Resource Locator (URL) pointing to any of the above files.

In some embodiments, the term of "the candidate object" is broadly used so as to include relevant information of the target subject that is matched with the application scenario (for example, the application program that is invoking the current input software application); for example, said candidate object may include name, keywords, types, links, file contents or other relevant information of the target subject. In another example, said candidate object may name, keywords, types or other relevant information of the target subject, or types of the input fields and so on.

Referring to Figure 1, the system 100 may include a processing module 110, a storage module 120, an input device 130, a display device 140 and a communication interface 150. Wherein, the processing module 110 can be a Central Processing Unit ("CPU") or a Graphic Processor Unit ("GPU"). Specifically, the processing module 110 may also include one or more printed circuit boards or micro-processing module chips, for executing computer program instruction sequences so as to perform various methods that will be described in more detail in the following. In some embodiments, the processing module 110 can be configured to perform, according to input information received via the input device 130 and the attribute data of the application scenario that is associated with the input information, a searching operation in the storage module 120 so as to obtain a candidate object that is matched with the input information.

The storage module 120 may include one or more random access memory ("RAM") and read-only memory ("ROM"). The computer program instruction can be accessed and read out from ROM or any other suitable memory, and can be loaded onto RAM so as to be executed by the processing module 120. For example, the storage module 120 can store one or more software applications. The software applications stored in the storage module 120 may include an operation system 121 used for general computer systems or for apparatuses controlled by software. Further, the storage module 120 may store the whole software application or may only store a part of the software application, which can be executed by the processing module 110. For example, the storage module 120 may store an input software that can be executed by the processing module 110 and performs the intelligent-predictable input method.

In some embodiments, the storage module 120 may also store one or more of main data, user data, application data and program code. For example, the storage module 120 may store a local database 123. In some embodiments, the local database 123 may include one or more candidate objects. For example, Figure 2 shows an exemplary candidate object obj1 that includes one or more data fields 300, 302, 310, 312, 314, 316, 318, 320, 322, 324, 330, 332, 340; such one or more data fields 300, 302, 310, 312, 314, 316, 318, 320, 322, 324, 330, 332, 340 store relevant information for describing the target subject indicated by the candidate object obj1 and the application scenario associated with the target subject, for example relevant information about the target subject (e.g. name field 302, keyword field 310, type field 312, links or file contents field 300 and so on), or for example relevant information about the application scenario associated with the target subject (e.g. keyword field of the application scenario 320, type field of the application scenarios 322, type field of the input fields 330 and so on). Wherein, said database can be used to broadly include any data formats that can store data.

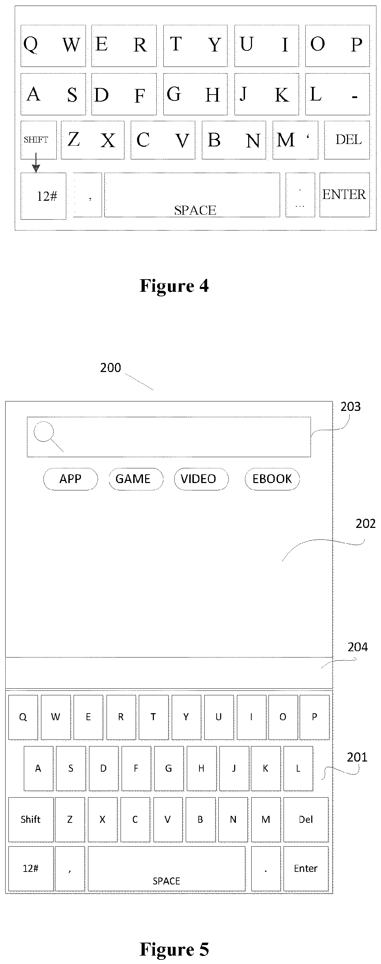

In some embodiments, the input device 130 and the display device 140 can be coupled to the processing module 110 via a suitable interface circuit. In some embodiments, the input device 130 can be a hardware keyboard, a key field or a touch screen; for example, the input device 130 can be a mobile phone keypad as shown in Figure 3. In some embodiments, the input device can also be a full-size QWERTY keyboard (as shown in Figure 3) or a full-size AZERT keyboard, or it can be a reduced keyboard where there are two letters on each key (as shown in Figure 4). In some embodiments, the input device 130 may include multiple physical keys or virtual keys, and each key corresponds to one digit and/or one or more letters. The user can press or tap a key of the input device 130 so as to input information into the system 100. In some embodiments, the input device 130 may also include some functional keys, and the user can initiate some procedures performed by the intelligent-predictable input system 100 via those functional keys, or interacts with the intelligent-predictable input system 100 by other means. In some embodiments, the input device 130 can be woke up or shut down by setting functional keys or system instructions; for example, when it is detected that the user selects an input field of a certain software application or choose to edit a text, a keyboard associated with the software application is woke up; when it is detected that the user has withdrawn from the input field or has finished the editing of the text or has selected a functional key set on the keyboard, the keyboard associated with the software application is hidden.

The display device 140 may include one or more display screens for displaying texts or graphics to the user. For example, the display device 140 can display a GUI. According to some embodiments, the display device 140 may include three display portions, one for displaying information input via the input device 130, one for displaying the matched target subjects associated with the user's inputs, and one for displaying the current application scenario. In some embodiments, the input device 130 can be implemented in a form of a keyboard GUI on a display device 140 (e.g. a touch screen).

The communication interface 150 can provide communication connections, so that the system 100 can exchange with some external apparatuses. According to one embodiment, the communication interface 150 may include a network interface (not shown), and the network interface is configured to deliver information to and receive information from an online service 160. According to some embodiments, the online service 160 can be implemented as a web service, a cloud storage service or the like on the Internet.

Figure 5 shows a user interface 200 of an exemplary intelligent-predictable input system 100. As shown in Figure 5, the user interface 200 may include several display areas; for example, it includes a keyboard area 201, an application scenario displaying area 202, an application scenario input field 203 and a target subject display area 204.

Wherein, the user can select and input in the application scenario input field 203, and the corresponding application scenario may perform an internal retrieval according to contents input into the application scenario input field 203 by the user; the specific location of the application scenario input field 203 in the application scenario displaying area 202 can be set according to differences among the application scenarios. Taking Google Play APP store for an instance, contents shown on the front page of google play is displayed in the application scenario displaying area 202, while the application scenario input field 203 is located at the top of the application scenario displaying area 202.

Once the user selects the application scenario input field 203, the activation of the application scenario input field 203 will trigger the keyboard area 201 and trigger the processing module 110 to obtain relevant attribute data according to the application scenario. Wherein, the attribute data associated with the application scenario may specifically include information associated with the application scenario, such as its name, its type, the region of its use, the time period of its use, the using languages, the input field type and the like of the application scenario. For example, if an input field in Google Play APP Store is selected, then it is triggered to acquire its associated attribute data; for example, it is acquired that its application scenario name is "google play", its type is online-store, and the input field type is a searching frame. What can further be acquired are subcategories of the page to which the current input field belongs, such as "hot/free - tools". For example, if an input field of Youku Video APP is selected, then the acquisition of its attribute data is triggered; for example, it can be acquired that its application scenario name is "Youku", its type is video player, the input field type is a searching frame, and time period corresponding to the input contents is the year of 2008 and so on.

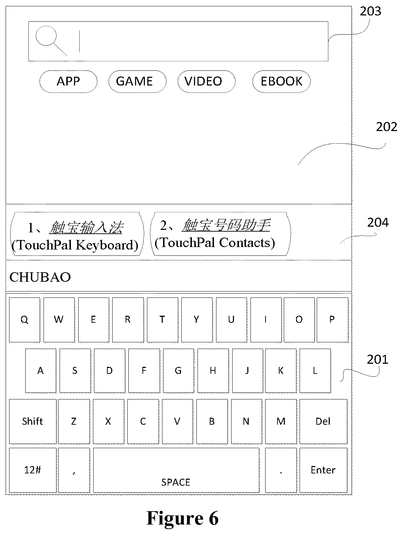

When the keyboard area 201 is triggered, for example when the keyboard area 201 is switched from a hidden state into a popup state, the system obtains an input sequence by detecting pressing or tapping on keys in the keyboard area 201. Wherein, the keyboard area 201 may include multiple physical keys or virtual keys, as shown Figure 6, and each key corresponds to a digit, symbol and/or letter. During the inputting process, the user sequentially presses respective keys and digits or letters of those keys form the input sequence. For example, when the user intents to input "CHUBAO", the user can sequentially presses keys of "ABC (2)", "GHI (4)", "TUV (8)", "ABC (2)", "ABC (2)", "MNO (6)" in the keyboard area 201. In some embodiments, considering that the user may probably press a wrong key by mistake, the input sequence may also include digits or letters on keys around keys that is pressed by the user. For example, if the user sequentially presses keys of "C", "J", "U", "B", "S", "O" on a full-sized keyboard, then the input sequence may include "CJUBSO", or may include "CHUBAO", or may include "CHIBAO", or may include "DUINEI".

According to some embodiments, the processing module 110 performs a filtering operation in the storage module 120 based upon the attribute data associated with the application scenario, so as to obtain a set of candidate objects that are matched with the application scenario; then, the processing module 110 obtains an input sequence from the keyboard area 201, and screens among the set of the candidate objects based upon the input sequence. For example, when the system detects that the user is inputting something into the application scenario input field 203 of the google play, the system 100 firstly filters the candidate objects according to the attribute data associated with google play, and marks the candidate objects that conform to such attribute, or screens out the candidate objects that conform to such attribute. Referring to Figure 6, when the system detects that the user inputs "C""H""U""B""A""O" through the keyboard area 201, the candidate objects matched with the input sequence "chubao" is searched out from the marked or screened-out candidate objects. For example, a keyword of a candidate object, indicating a target subject of " 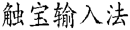 "(which is the application software "TouchPal Keyboard" and has a name corresponds to "CHUBAO SHURUFA" in Chinese phonetic alphabet), includes "CHUBAO", and a keyword of a candidate object, indicating a target subject of " 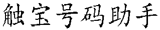 "(which is the application software "TouchPal Contacts" and has a name corresponds to "CHUBAO HAOMAZHUSHOU" in Chinese phonetic alphabet), also includes "CHUBAO", thus the input sequence is partially overlapped with the keyword of the target subject. Accordingly, based upon the input sequence "chubao", the candidate objects are matched and then the target subjects associated with these matched candidate objects (i.e. links of software APPs of " 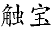 " Keyboard and " 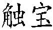 " Contacts) are then obtained.

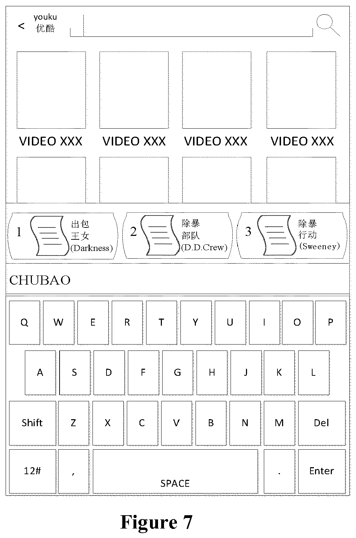

According to some embodiments, the processing module 110 screens in the storage module 120 based upon the input sequence, and performs filtering and matching operations on the result based on attribute associated with the application scenario. For example, the processing module 110 screens based on key sequence of "C""H""U""B""A""O" so as to obtain an input sequence "CHUBAO", and then further screens according to the input sequence so as to obtain matched candidate objects, indicating target subjects of "TouchPal Keyboard" APP, "TouchPal Contacts"APP, " 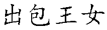 (which is the video file "Darkness" and has a name corresponds to 'CHUBAO WANGNV' in Chinese phonetic alphabet)", " 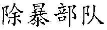 (which is the video file "D. D. Crew" and has a name corresponds to 'CHUBAO BUDUI' in Chinese phonetic alphabet)", " 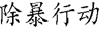 (which is the video file "Sweeney" and has a name corresponds to 'CHUBAO XINGDONG' in Chinese phonetic alphabet)" and the like. Those candidate objects have a same part "CHUBAO" of their name fields, which matches the input sequence, even if they belong to totally different types of files. Then, the processing module 110 performs a filtering operation based upon the attribute data associated with the application scenario. When the application scenario is Google Play, referring to Figure 6, which indicates that the user is searching for an application software, the candidate objects, indicating target subjects of "TouchPal Keyboard" APP 610 and "TouchPal Contacts" APP 620, which are application softwares, are obtained, and associated target subjects (i.e. links associated with "TouchPal Keyboard", "TouchPal Contacts") are obtained based upon these matched candidate objects. Referring to Figure 7, when the application scenario is Youku video, indicating the user is going to watching videos, the candidate objects, indicating target subjects of "Darkness" (CHUBAO WANGNV)710, "D. D. Crew"(CHUBAO BUDUI)720, or "Sweeney"(CHUBAO XINGDONG) 730 , which are matched with Youku video, are obtained; and then the target subjects associated with these candidate objects (i.e. links associated with these videos) are further obtained. Furthermore, for example, the processing module 110 can set a matching mode of the input sequence by means of system default setting or user's manual operation; for example, the matching is performed from front to back of the input sequence, or the matching is performed at any location of the input sequence, or the matching begins at a designated location of the input sequence; and then filtering operation is performed according to the attribute data associated with the application scenario so as to obtain the candidate objects.

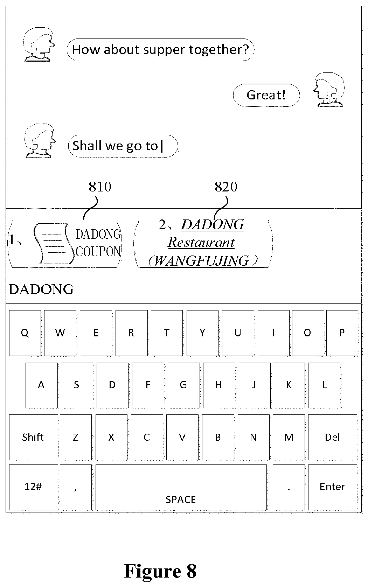

Wherein, when the processing module 110 performs a filtering operation in the storage module 120 based upon the attribute data associated with the application scenario or performs a filtering and matching operation on the results found in light of the input sequence based upon the attributes associated with the application scenario, additionally, a screening operation is performed based upon the attributes associated with the application scenario, so as to obtain the candidate objects that meet the matching settings, and to exclude the candidate objects that fail to meet the matching settings. For example, when the content of a certain data field of candidate objects doesn't match attribute data associated with the application scenario, the candidate objects will be excluded. For example, referring to Figure 8, the processing module 110 acquires a input sequence "DA DONG" (name of a Chinese restaurant) that a user inputs in SMS or an Instance Message Service, and then the target subjects, associated with the candidate objects that have a name field of "DA DONG" and have a type of "web page" or "picture", are selected. In such an application scenario, the user's input of "DA DONG" is comprehended as an intention to obtain information of the restaurant with the name of "DA DONG". As a result, the target subjects including information related to the restaurant, e.g. a discount information, or a homepage, are screened out, based upon the attribute data associated with the current application scenario and as well as the input sequence.

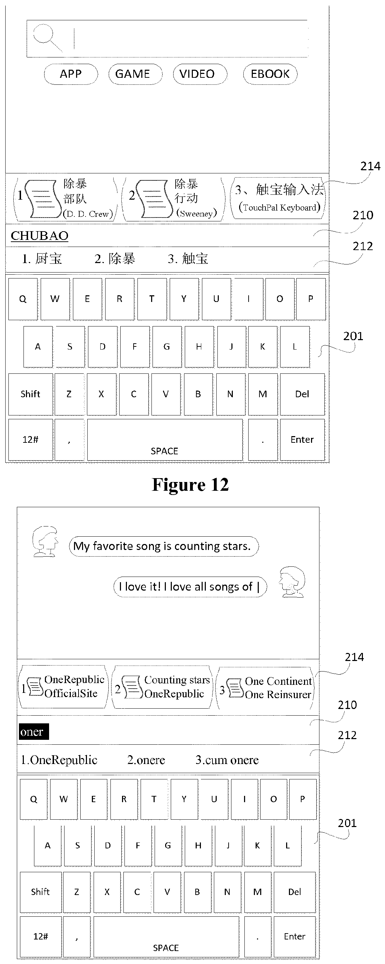

According to some embodiments, after obtaining an input sequence from the keyboard field 201, besides filtering the matched candidate objects according to the input sequence, the proceeding module 110 further comprises: obtaining corresponding candidate words according to the input sequence. The proceeding module 110 may obtain matched candidate words and filter candidate objects at the same time, and may also firstly obtain matched candidate words and then filter candidate objects according to corresponding candidate words. For example, referring to Figure 12, when a user inputs "C""H""U""B""A""O" successively through the keyboard field 201, before the user confirms the input character string, the character string is displayed in a specific format, such as with underline, in the input field 210. When the system 100 detects the input character string, the system 100 searches in the storage module 120 for candidate words corresponding to the character string, such as " 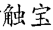 " " 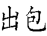 " " 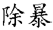 " and so on, and display the matched candidate words in candidate words field 212. The system 100 further searches for candidate objects matched with the input character string "CHUBAO" in the storage module 120, for example, searches for the candidate objects matched with the input sequence in those that have been marked or filtered, further obtains and displays one or more target subjects associated with the candidate object in the display field 214. In one embodiments, the system 100 processes a search for candidate words and a search for the matched target subjects at the same time while independently. For example, the system 100 obtains the candidate words " 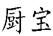 " " 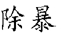 " " 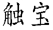 " (corresponding to a same 'CHUBAO' in Chinese phonetic alphabet but corresponding to different Chinese characters and meanings) and so on, according to the input sequence "CHUBAO", and displays the candidate words in the candidate words field 212. Meanwhile, the system 100 searches for a matched target subject according to the input sequence and displays the target subject in the target subject display field 214. In another embodiments, firstly, the system 100 obtains candidate words according to input sequence and displays the candidate words in the candidate words field 212. After obtaining candidate words, the system 100 then searches for the matched target subjects according to those candidate words, and displays the target subjects in the target subject display field 214. In some embodiments, the sorting of the candidate words will have an effect on the sorting of target subjects or the corresponding candidate objects. For example, the target subject, corresponding to the prior candidate word, are in a prior order, or for another example, the target subject may be sorted in a weighted order calculated by weight factors, in which the weight factors are obtained according to the sorting of candidate words. Referring to Figure 13, when a user inputs "O""N""E""R", before the user confirms the input sequence, the input sequence is displayed in a specific format, such as the highlight format, in the input field 210. Then, the candidate words "OneRepublic", "oner" and "cum onere" are obtained, upon a predication of the input sequence, and displayed in the candidate words field 212 and at the same time the candidate objects matched with the input sequence are obtained and the corresponding target subjects are displayed in the target subject display area 214. Since the candidate word "OneRepublic" has a higher priority than that of the candidate word "onere", the candidate objects corresponding to the candidate word "OneRepublic", e.g. a web page "OneRepublic Official Site" and a song "Counting Stars-OneRepublic", have a higher ranking than candidate objects "oner.com", corresponding to the candidate word "onere"..

According to some embodiments, the candidate objects that contain one or more data fields are marked in the storage module 120, and the candidate objects are related, based on their one or more data fields and adapted to indicate one or more target subjects, with the input sequence or with the attribute data associated with the application scenario.

Referring to Figure 2, taking a stored candidate object obj1 for example, exemplary data fields may include: information about the target subjects associated with the candidate object, for example, a name field 302, a keyword field 310, a type field 312, a time field 314, a version field 316, and a location field 318 of the target subject; the attribute data of the application scenario associated with the target subjects, for example, a scenario keyword field 320, a scenario type field 322, and a language type field 324 of the application scenario; information about the input field, for example, an input-type field 330 and a matching mode field 332 of the input field; as well we the supplementary condition field 340 for supplementing the information about the target subject or the application scenario or the input field, and so on. In some embodiments, character strings in above data fields can be a corresponding Chinese-phonetic-alphabet character string or a corresponding sequence in English or any other western language. In some embodiments, based on the demand of the user, a user-defined auxiliary data field can further be added into or linked to the candidate object. In some embodiments, such associated application scenario can be an application scenario where the target subject can be reviewed, edited and download, and can be an application scenario where the current input of said target subject is displayed.

Wherein, referring to Figure 2, the application keyword field 310 of the target subject may record the name, byname or abbreviation of the target subject, for example, "TouchPal Keyboard" or "TouchPal Contacts". For example, referring to Figure 6, when the user inputs via the keyboard area 201 a character string (for example, CHUBAO, CHUB) corresponding to the whole or a part of the name of the target subject, so as to obtain "TouchPal Keyboard" or "TouchPal Contacts". Similarly, the user can also input a character string corresponding to the abbreviation of the target subject to obtain the matched candidate objects; for example the user can input "KFC" to obtain web pages or coupon pictures associated with Kentucky Fried Chicken, or the user can input "TANGDUN" or "Downton Abbey" to obtain movie files of "TANGDUN ZHUANGYUAN (i.t. Downton Abbey)".

The application keyword field 310 can further store keywords referring to functions, brands or other well-known characteristics of the target subjects. Specifically, as for a software-type target subject, its keyword usually is its function, brand and the like; for example, as for "ADOBE READER" standing for PDF Reader, its keyword may be PDF; "Dolphin" is used as keyword of "Dolphin Browser". As for an audio-video type target subject, its keyword may be a name of series, the director, performers, its granted award, default provision and the like; for example, "Bean" may be used as a keyword of "Mr Bean" series movies; "HANKS" may be used as a keyword of movies whose director is named Hanks or movies having a performer named Hanks. As for a web page type or figure type target subject, the keyword can be set according to its linked object; for example, as for a web page linked to a piece of news, its keyword may be the news's keyword; for example, the keyword of news about WenChuan Earthquake may be "WENCHUAN". As for a web page linked to a merchant coupon, its keyword can be set according to the merchant's name or the name of its provided products; for example, the keyword of a Nike coupon may be "NIKE". The keyword field 310 can be indexed, so that the searching operation can be performed according to associated attribute data that is being currently obtained.

Referring to Figure 2, the candidate object obj1 may also include a type field 312, for describing the type of the target subject. For example, the type of the target subject may be a link pointing to an application file or a web page or another link, e.g. a link for downloading a software, or a link for playing a video file, or a link for downloading a video file, and the like. For example, when the processing module 110 acquires that the application scenario, which the user is currently inputting in, is Youku Video Player, the processing module 110 selects the candidate objects with a type field of "video" or "link to a video file". Referring to figure 8, the target subject 810 is a coupon of the restaurant "DA DONG" with a type field of picture, and the target subject 820 is a homepage of the restaurant "DA DONG" with a type field of website. For another example, target subjects in Figure 6 refer to a downloadable software packages of "TouchPal Keyboard" or "TouchPal Contacts" separately. The target subjects in Figure 7 refer to videos of "Darkness" or "D. D. Crew" or "Sweeney" separately.

Referring to Figure 2, the candidate object obj1 can further include a time field 314 of the target subject, and the time field 314 may have the following forms: specific date such as 20091012; rough date such as 2009 or 0314 or the 80s. In some embodiments, the system 100 can obtain time information associated with the application scenario, and compares it with the time field 314 of the candidate object obj1, in order to determine whether or not such candidate object obj 1 is matched.

Referring to Figure 2, the candidate object obj1 can further include a version field 316 of the target subject. The version field 316 can be of a digit form, for example the specific version number; and can be name of the standard or format for marking the target subject, such as XviD or AC3.

Referring to Figure 2, the candidate object obj1 can further include a location field 318 of the target subject. The location field 318 may indicate the geographical position of the target subject. For example, the location field 318 may record address information corresponding to the target subject, including street number, street name, the name of the city, the name of the state and the postal code. In some embodiments, the location field 318 may record common regional ID in place of the specific address. In some embodiments, the location field 318 can further record geographic coordinates of the target subject that can be conveniently used by GPS navigation system, including latitude, longitude and ellipsoid height. In some embodiments, the location field 318 may be a combination of regional ID and specific geographic coordinates.

The time field 314, the version field 316 and the location field 318 can all be indexed, so that when the user performs inputting operation in the set application scenario, the user is able to obtain the candidate objects which accord with the associated attribute data in terms at least one of the time field, the version field and the location field.

Besides the attribute data field for describing the target subject, the candidate object obj1 may also include an attribute data field for describing application scenarios associated with the target subjects. The application scenarios can be set by the system. When the user needs to change the application scenario according to actual demand, the application scenario associated with the target subject can also be changed by changing the fields corresponding to candidate results.

Specifically, referring to Figure 2, the candidate object obj1 may include a scenario name field 320 for the application scenario, and may include the name, the abbreviation, the byname, used names, keywords and the like of the application scenario. For example, the name field 320 of "Jingdong mall" may be "JINGDONG", "JD" or "360buy".

Referring to Figure 2, the candidate object obj1 may also include a scenario type field 322 for the application scenario, for indicating application software that is currently performing an inputting operation or types of application software that can be used by the target subject. Wherein, the type of the application scenario may be text-based, for example Wechat or Short Message Service and the like; it may be online application store-based, for example google play or WanDouJia and the like; it may be audio-video-based, for example XiamiMusic or YouKu and the like; it may be shopping-based, for example Taobao (similar with eBay) or Jingdong mall (similar with Amazon) or MeiTuan (similar with Groupon) and the like; it may be a map-based, for example google map and the like; or it may be application software of other type. Referring to Figure 7, since the candidate objects , indicating the target subjects "Darkness", "D. D. Crew", "Sweeney", have scenario type fields 322 of "audio-video-based", when the current input scenario is YouKu, the system 100 further filter according to the scenario type field 322 and obtain matched candidate objects.

Referring to Figure 2, the candidate object obj1 may also include a language field 324, for indicating the language of the application scenario, for example, Indo-European languages such as English, French, Italian, German, Dutch, Farsi, Afghan, Finnish; or Sino-Tibetan languages such as simplified Chinese, traditional Chinese, Tibetan language; or Caucasian Family languages such as Chechen, Georgian language; or Uralic languages such as Finnish, Hungarian; or North America Indian languages such as Nagligvagel, Cherokee language, Siouan language, Creek; or Austro-Asiatic languages such as Cambodia, Bengali, Bulang; or Dravidian languages such as Tamil; or Altai languages such as Eastern or Western Altai; or Nilo Saharan languages as used by those countries in northern Africa and western Africa; or Niger - Congo languages such as Niger language, Kongo, Swahili; or Secco khoisan languages such as Hottentot, Bushmen language, Sandawe; or Semitic-Hamitic languages such as Hebrew, Arabic, Old Egyptian, Hausa; or Austronesian languages such as Indonesian, Malay, Javanese, Fijian, Maori.

Usually, after the user enters the application scenario, the user will select the set input field to make input. Referring to Figure 2, the candidate object obj1 may also include an input-type field 330 for the input field. The input-type field 330 is for describing the type of the input field, for example text input field, email address input field, search input field, URL input field, telephone number input field and so on.

Referring to Figure 2, the candidate object obj1 may also include a matching mode field 332. When the user makes input at the input field, its associated application scenario matches contents in the input field with the target subject in light of the matching mode field 332. For example, the matching mode field 332 may include front matching or rear matching or exact matching or fuzzy matching of contents in the input field with the target subject. Wherein, the matching mode field 332 may also include right-to-left matching and left-to-right matching. In some embodiments, the system may set corresponding matching mode according to the application language field 324 of the application scenario; for example, as for Hebrew or Arabic, the right-to-left matching mode is applied. In some embodiments, the matching mode field 332 of the candidate object obj1 may also be set according to the settings made by the user.

Referring to Figure 2, the supplementary condition field 340 may be used for describing information such as detailed description, subcategories or evaluation score and the like of the target subject or the application scenario, or for describing auxiliary information of the input field. In some embodiments, the supplementary condition field 340 may include supplement to the information of the target subject; for example, the supplementary condition field 340 may include evaluation score information of the target subject or detailed description of the target subject. In some embodiments, the supplementary condition field 340 may also include supplement to the information of the application scenario; for example, the system 100 may mark the supplementary condition field 340 of the target subject corresponding to a route of "WanDouJia - Android game classification - Diamond Puzzle Matching" as second level, for indicating the second level sub-interface of the target subject located at the application scenario "WanDouJia". In some embodiments, the supplementary condition field 340 may also include supplement to the information of the input field; for example, the supplementary condition field 340 may include language type of the input field.

According to some embodiments, the user's personal attribute can also be added or linked to the candidate object, as an attachment data field.

For example, the candidate object obj1 may also include a preferred action field for the target subject, for indicating preferred actions that tend to be made with respect to the target subject. For example, if the system 100 detects that the user inputs a sequence "NOT AFRAID" in the input field, filtering operation is performed based upon the input sequence and the attribute data associated with the application scenario, so that the candidate object, corresponding to the target subject of music "Not Afraid", is obtained, which has a preferred action field of "YouTube", thus, when it is detected that the user selects the candidate object, its corresponding preferred action field is read out and turns out to be "YouTube"; then, searching operation is performed in the system in order to find out whether or not software of "YouTube" exists. If it exists, "YouTube" is used to open such music file. Alternatively, one or more target subjects corresponding to the candidate object can be determined according to the preferred action field; for example, as for the candidate object including the music "YangCong", a corresponding target subject may be a link for playing the music "YangCong" in the "XiamiMusic" according to a preferred action field of "XiamiMusic". In some embodiments, the system 100 may make statistics respectively with respect to frequencies of the user using software of local device to perform operations on the target subject, and set the most frequent action as the preferred action, according to the order from high to low in terms of the frequencies of operations.

Wherein, the candidate object obj1 may also include a personal data field for indicating personal attribute data such as gender, age, download history information, input history and the like of the user. In some embodiments, the system 100 may prompt the user to input his/her gender and age range. In some embodiments, the system 100 may collect the input history or download history information of the user, makes analysis according to the input history or download history information of the user, and identify the gender and age range of the user based upon analysis result, and records the identification result.

Wherein, the candidate object obj1 may also include an executed action field, for describing the action executed at the time when the user selects the corresponding target subject. Such action can be set by default based on the type field; for example, when the target subject selected by the user is a Uniform Resource Locator URL, operation of opening such URL is performed; and when the target subject selected by the user is an audio/video file, operation of playing such audio/video file is performed.

The storage module 12 can store the candidate object and its associated data fields into a local device or a Cloud server, and also can only store associated data fields for realizing the basic matching operation into a local device, and stores data fields associated with further accurate matching operation into Cloud Storage; for example, the storage module 12 can store at least one of the application keyword field, the application type field, the scenario keyword field, the scenario type field and the input-type field into a local device, as data fields for realizing the basic matching operation; while other data fields can be obtained by downloading by means of networking.

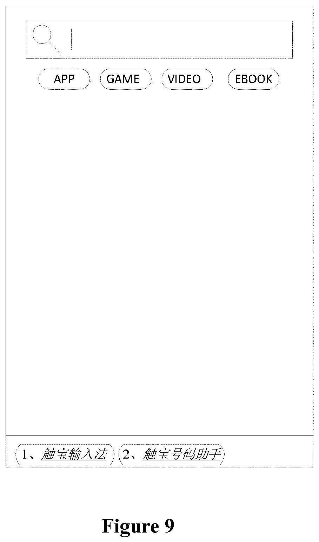

When matched candidate objects has been obtained, the processing module 110 can further display the corresponding target subjects according to the matched candidate objects to the user through the target subject display area 204. Wherein, the target subject display area 204 may be located at a designated location in the user interface 200. In some embodiments, referring to Figure 6, when the inputting module is triggered, i.e. when the keyboard area 201 is in the popup state, a target subject display area 204 can be arranged above the keyboard or at other region that does not overlap with the keyboard area 201. In some embodiments, referring to Figure 9, the inputting module is not triggered, or the inputting module is disenabled before the matched candidate objects is obtained. Accordingly, the target subject display area 204 can be arranged a designated location of the user interface, for example, it can be arranged below the user interface.

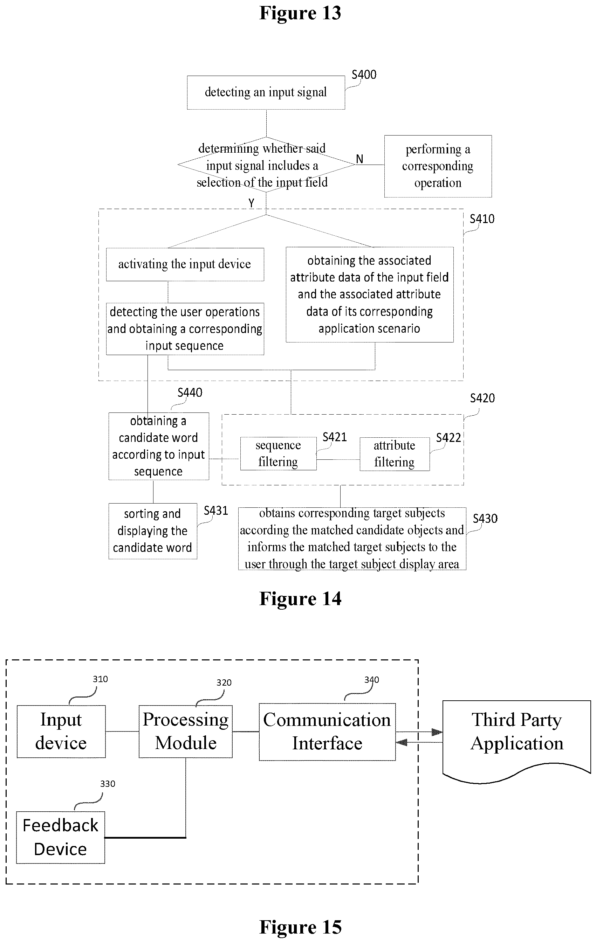

Referring to Figure 15, according to another embodiment of present invention, the intelligent-predictable input system 100 may include a processing module 310, an input device 320, a feedback device 330 and a communication interface 340. Communication interface 340 is adapted to connect the system 100 into a third-party search engine, so that the system 100 is capable to search for a matched candidate object through the third-party search engine. Specifically, when the user inputs through the system 100, the input device 320 receives the input information from the user and sends the information to the processing module 310; then the processing module 310 sends the information and attribute data of the current application scenario corresponding to the input information, to the third-party search engine, via the communication interface 340. When the processing module 310 receives target subjects acquired by the third-party search engine via the communication 340, the processing module 310 further feedbacks the result to user through feedback device 330. Wherein, processing module 310 may also obtain the attribute data associated with the application scenario, such as its name, or its type, or the keyword, or the location, or the time, or the usage language, or the like of the application scenario, or the input field type, or the matching mode, or its name, or its type, or the time, or the version, or the location, or other personal data of the target subject. After receiving the attribute data associated with the application scenario, the processing module 310 may also send the attribute data to the third-party engine, so as to obtain the target subjects matched with the application scenario. By using the third-party search engine, it can reduce the requirement of local data storage and calculated quantity. It makes the system 100 can be better adapted in those electrical equipment with low settings and may obtain a more flexible matched result according to different third-party search engine.

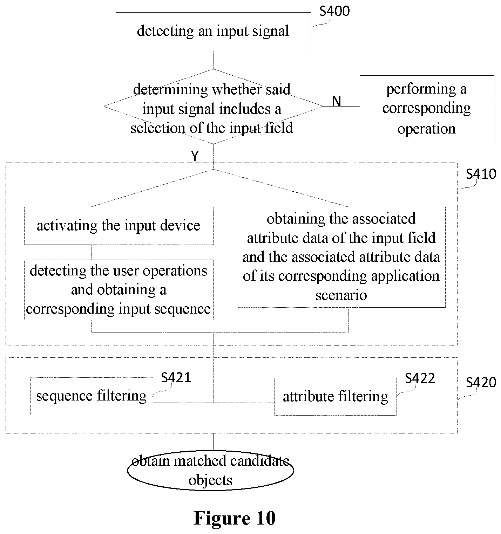

One or more components of the intelligent-predictable input system 100 can be used to realize intelligent prediction according to the contents input by the user and in combination with the application scenario input by the user, so as to obtain matched candidate objects and the corresponding target subjects; i.e. it can be used to realize an intelligent-predictable input method. For example, Figure 10 shows an exemplary flow chart of an intelligent-predictable input method.

Specifically, the processing module 110 can detect user operations from the input device 130. The user operations may be pressing a key, gesture or tapping on the touch screen, moving of the device, or voice command. The user operations can be further interpreted by the processing module 110 into selection of objects or performing operation instructions on objects or pressing a key. The user operations on side of the input device 130 form the input signals that are to be transferred to the processing module 110.

Firstly, referring to Figure 10, in the step S400, the processing module 110 can make sure whether or not the input signal include selection of the input field. For example, the user may realize the selection of the input field by means of clicking the input field, specific gesture, movement of the device, or voice command.

If it is detected that the input signal contains the selection of the input field, the step S410 is performed, and the processing module 110 can activate the input device 130. When it is detected that the input device 130 is activated, the processing module 110 further detect the user operations in the input area 201 of the input device 130, and obtains a corresponding input sequence according to the user's operations. Specifically, the processing module 110 can mark digit and/or letter associated with every key in the input area 201, and when it is detected that the user operation is pressing the key, digit and/or letter associated with such key is added into the input sequence, and the input sequence is updated. For example, the processing module 110 can respond to the press on the key "O", so as to add "O" into an existing input sequence "C""H""U""B""A".

In some embodiments, the processing module 110 may also include selecting some character strings from all the character string input by the user, and filtering the candidate objects by taking the selected character strings as the input sequence.

If it is detected that the input signal contains the selection of the input field, in the step S410, the processing module 110 may further obtain the input field as well as the associated attribute data of the application scenario corresponding to the input field, for example, the input field type, the application scenario name, the application scenario's abbreviation, the application scenario's keyword, the application scenario type, language type and so on. The processing module 110 may obtain all the associated attribute data, or may obtain only some of the associated attribute data according to networking condition or the user's settings; for example, when it is under a non-WIFI state, only the application scenario name, the application scenario type and the input field type are obtained.

After the associated attribute data and the input sequence are obtained, the step S420 is performed, and the processing module 110 further transmit the input sequence and the associated attribute data to the storage module 120, for comparing with data fields contained in the candidate objects stored in the storage module 120.

In some embodiments, the step S420 may include a sequence filtering step S421 for filtering the candidate objects according to the input sequence, and an attribute filtering step S422 for performing filtering operation according to the associated attribute data. The processing module 110 may perform the sequence filtering step S421 first, or may perform the attribute filtering step S422 first, or may perform both of them alternately.

In attribute filtering step S422, the processing module 110 obtains associated attribute data, and performs filtering operation according to the associated attribute data.

In some embodiments, the processing module 110 further obtains attribute category of every data of the associated attribute data, associates the attribute categories of the associated attribute data with data field category of the candidate object, then compares contents in one or more same categories, and make screening operation according to the comparison result. For example, when it is detected that the input field bearing the user operation is an input field at Amazon's front page, the processing module 110 extracts the application scenario name of "amazon" and the input field type of "search", from detecting result. the processing module 110 associates the attribute categories of the associated attribute data with data field categories of the candidate object; specifically it associates the extracted application scenario name with "the scenario keyword field" of the candidate object, and associates the input field type with "the input-type field" of the candidate object, and respectively compares the contents in the same category (i.e. making sure whether or not "the scenario keyword field" of the candidate object includes "amazon", and making sure whether or not "the input field type field" of the candidate object includes "search"). If contents of individual data field categories of a candidate object are consistent with the associated attribute data, the processing module 110 screens out such candidate object, as a matched candidate object. In some embodiments, the processing module 110 may also obtain the associated attribute data according to the order of data field categories of the candidate object, so that the attribute categories of the obtained associated attribute data correspond to data field categories of the candidate object. For example, based upon "the location field" of the candidate object, the processing module 110 obtains information about current position, for example obtains the information capable of identifying the current position by means of WIFI/GPRS/base station and the like, and compares the obtained position information with the content of "the location field", to determine whether they are matched.

In some embodiments, the processing module 110 may also make judge according to one or more of the associated attribute data, and when one or more of the associated attribute data meet the predetermined conditions, the candidate object whose contents of predetermined data fields are predetermined contents are selected as matched candidate objects. For example, the processing module 110 obtains the application scenario as being currently input by the user, and when it is determined that the type of the currently input application scenario is online store, the candidate objects whose "the application type field" are "an application file or a connecting link of application file" are determined to be matched candidate objects. Also, for example, the processing module 110 acquires that the user is currently inputting something in text-based software such as Short Message Service or Wechat, and then determines the candidate objects with "the scenario type field" of "text" to be the matched candidate objects.

In the sequence filtering step S421, the processing module 110 detects the signals input by the user, and transforms the input signals into corresponding letters according to the layout of keys in the keyboard area 201, so as to form the input sequence. When the processing module 110 detects that the inputting of the user stops, it filters the candidate objects according to the input sequence that has been already recorded.

In some embodiments, the processing module 110 compares the input sequence that has been already recorded with contents in predetermined data field of a candidate object (for example, "the application keyword field"). When the input sequence is consistent with contents in predetermined data field, such candidate object becomes a matched candidate object. For example, when the processing module 110 detects that character string input by the user is "CHUBAO", and matches such character string with contents in individual "the application keyword field" of candidate object, so as to filter out matched candidate objects, for example a piece of software of "TouchPal Keyboard", a piece of software of "TouchPal Contacts", a piece of video of "Darkness", a piece of video of "D. D. Crew" and the like, or links connecting to above files.

In some embodiments, when the processing module 110 matches the input sequence with contents in the predetermined data field of the candidate object, it further read out contents in the matching mode field or other predetermined data field of the candidate object, which are associated with the matching mode, and performs matching operation according to the read-out matching mode.
for example, the processing module 110 reads out contents of "the matching mode field" of individual candidate object, and when the content of the matching mode is "front", i.e. front matching mode, the processing module 110 matches it with the input sequence, starting from the beginning of the contents in the predetermined data field, by a front matching mode. Alternatively, when when the content of the matching mode is "fuzzy", i.e. fuzzy matching mode, the processing module 110 matches it with the input sequence, starting from any position of the contents in the predetermined data field, by a fuzzy matching. For example, when the input sequence is"CHU" and the matching is performed by front matching mode (i.e. content of "the matching mode field" is front), "the application keyword field" of the obtained matched candidate objects begins with "CHU" or is "CHU", for example a piece of software of "TouchPal Keyboard", a piece of software of "TouchPal Contacts", a piece of video of "Darkness", a piece of video of "D. D. Crew" and the like, or links connecting to above files. Also, for example, the input sequence is"DONG" and the matching is performed by fuzzy matching mode (i.e. content of "the matching mode field" is fuzzy), the processing module 110 searches in the contents in "the application keyword field" of the candidate object, and take it as a matched candidate object if "DONG" exists in its any position.

Referring to figure 14, after obtaining the input sequence, step S440 may be further executed. The processing module 110 sends the input sequence to the storage module 120, in order to search for one or more matched candidate words. Wherein, step S440 and the sequence filtering step S421 can be processed at the same time or independently. For example, step 440 may be firstly executed to obtain matched candidate words, and then, step S421 may be executed to obtain matched target subjects based on the candidate words from step S420.

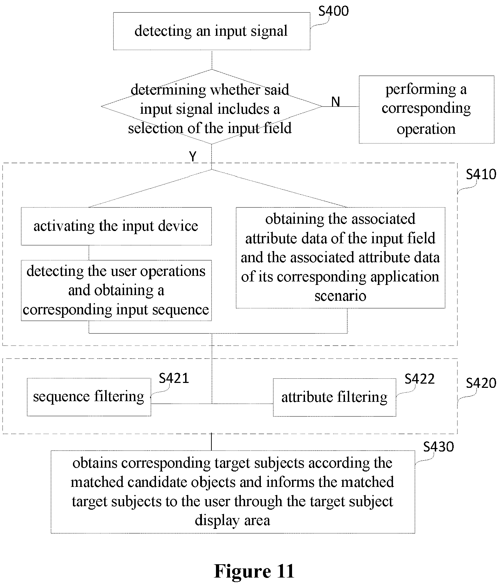

Referring to Figure 11, when a matched candidate object is obtained, a step S430 can be further performed, and the processing module 110 obtains corresponding target subjects according the matched candidate objects and informs the matched target subjects to the user through the target subject display area.

In the step S430, a step of sorting the target subjects obtained by matching is further included. According to some embodiments, sorting factors may refer to the matching degrees of individual data fields, and may further refer to evaluation scores of target subjects, or personal attributes of the user. Weight of matching degree of each target subject can be calculated based upon each factor and its weight value; for example, as for data fields for basic matching, for example the application keyword field, the application type field, the scenario keyword field, the scenario type field and the input-type field, squared weighting is applied, while ordinary weighting is applied for other data fields, so that weight values are obtained, and the sorting levels are determined based on the obtained weight values.

In another embodiments, referring to Figure 14, step S431 can be further performed so as to sequence and display the obtained candidate words. Therein, referring to Figure 12 and Figure 13, the candidate words and the target subjects can be displayed through different region at the same time, so that the user may have more choices. In another embodiments, searching for and sorting the candidate words are independent with matched target subjects. In other embodiments, the sorting of candidate words may impact the sorting of target subjects. For example, the target subjects that related to the prior candidate words are in priority order. Referring to Figure 13, the target subjects, a web page "OneRepublic Official Site" and a music file "Counting Stars-OneRepublic", are prior to target subjects , a web page "oner.com", because candidate word "OneRepublic" is prior to candidate word "onere". In other embodiments, step S431 may further comprises to obtain the weight factor for each candidate word based on their sorting, and then calculate the weight of each target subject according to its corresponding candidate word.

Therein, a person skilled in the art should understand that the type of feedback in order to prompt the user is not restricted to visual feedback, for example, it may prompt target subjects by auditory feedback or other type of feedback.

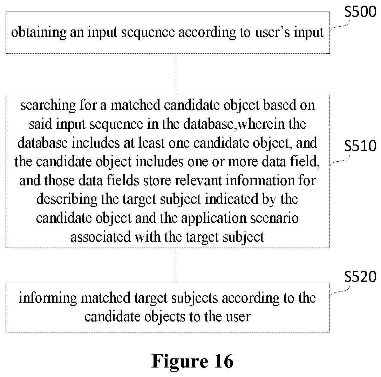

Referring to Figure 16, in other embodiments of an intelligent-predictable input method according to the present disclosure, may include:
Step S500 may be performed, wherein an input sequence may be obtained according to user's input. Furthermore, step S500 may comprise to detect whether there is a selection of input field by processing module 110. If there is such a selection, the input device 130 may be activated. Then, the processing module 110 may record the user operation through input device 130, and obtain a corresponding input sequence.

Then step S510 may be performed to search for a matched candidate object based on said input sequence in the database. Wherein, the database may include at least one candidate object, and the candidate object includes one or more data field, and those data fields store relevant information for describing the target subject indicated by the candidate object obj1 and the application scenario associated with the target subject.

Specifically, the database can be set according to the target subject related to the candidate objects and relevant information of application scenario. Referring to Figure 2, the storage module 120 may include candidate objects with one or more data fields and those candidate objects relate to input sequence or attribute data of the application scenario, according to one or more data field set.

In step S510, processing module 110 compares the obtained input sequence with the certain data fields of the candidate objects in the database. When the input sequence conforms to certain data field, the candidate objects is considered to be a matched candidate objects. In some embodiments, it may also include performing the matching according to the matching mode field or other data fields related to the matching mode.

After obtaining the matched candidate objects, move on to step S520, wherein, the expected target subjects, according to the matched candidate objects, are then fed back to the user. For example, the target subjects can be displayed to user in the target subject display area.

According to some embodiments, the method further comprises: obtaining the candidate words according to the input sequence, and then feeding back the candidate words to the user. Wherein, the obtained candidate words and the matched target subjects may be displayed in separated area at the same time.

Compared with the prior art, the present disclosure takes full advantage of multiple data fields, and uses those data fields to associate the candidate object with relevant target subject and application scenario; thus, the present disclosure is able to obtain the candidate object that can better meet the user's expectation or to implement a better matching under designated environments, according to environmental factors at the time when the inputting operation is performed. Since the target subjects corresponding to the candidate objects can be software programs or media files or associated links or content-based web links, databases include the results under various specific application scenarios, so that the result of the input can be intelligently adapted to different applications, and thus it improves the user's experience of inputting operations.

Furthermore, the present disclosure applies multiple data fields of the candidate objects, so that the matching of the candidate objects can be realized without further steps of installing/uninstalling the cell thesaurus or steps of removing the redundancies, thus the inputting efficiency is enhanced and the electricity consumption is reduced.

The present disclosure can be applied to various languages, and the inventive concept is not limited to the disclosed embodiments in the Description and the mentioned specific languages. A person skilled in the art should understand that the present disclosure may be applied to for example, Indo-European languages such as English, French, Italian, German, Dutch, Farsi, Afghan, Finnish; or Sino-Tibetan languages such as simplified Chinese, traditional Chinese, Tibetan language; or Caucasian Family languages such as Chechen, Georgian language; or Uralic languages such as Finnish, Hungarian; or North America Indian languages such as Nagligvagel, Cherokee language, Siouan language, Creek; or Austro-Asiatic languages such as Cambodia, Bengali, Bulang; or Dravidian languages such as Tamil; or Altai languages such as Eastern or Western Altai; or Nilo Saharan languages as used by those countries in northern Africa and western Africa; or Niger - Congo languages such as Niger language, Kongo, Swahili; or Secco khoisan languages such as Hottentot, Bushmen language, Sandawe; or Semitic-Hamitic languages such as Hebrew, Arabic, Old Egyptian, Hausa; or Austronesian languages such as Indonesian, Malay, Javanese, Fijian, Maori.

Only for purpose of illustration, this disclosure has described some aspects and embodiments with reference to the components shown in the accompany drawings. However, functions of those components can be overlapped, and can be rendered by less or more elements and components. Additionally, all or a part of the functions of those described elements can co-exist or can distribute over some geographically separated locations. Moreover, implementations, features, aspects and principles of the present disclosure can be realized in various embodiments, and is not limited the illustrated environments. Additionally, the sequence of above events is illustrative rather than restrictive. Thus, other method steps can be used; and even above method is used, the specific sequence of events can be changed without departing from the scope of the present disclosure. Moreover, some steps can be omitted, and some steps can be added.

Various embodiments of the present disclosure as discussed in the above can generally be implemented in or on computer system structures that are well known in the art, functions of various embodiments of the present disclosure can be implemented in hardware or software. On software, one component may be a step, one program or a part of it, which performs some specific or relevant functions. On a hardware, one component is a one functional hardware unit which is designed to be used with other components. For example, one component can be implemented by separate electronic component, or can be configured as a part of a complete circuit such as an Application Specific Integrated Circuit (ASIC), and there are still some other possibilities. A person skilled in the art should understand that, the present disclosure can also be implemented by a combination of hardware components and software components.

Some specific embodiments of the present disclosure have been discussed in the above. It is appreciated that, the present disclosure is not limited to the described embodiments; a person skilled in the art can make various variation and modifications with the scope of the claims, which won't influence the essential contents of the present disclosure.

## Claims

1. An intelligent-predictable input method, comprising:
detecting an input signal;
obtaining an input sequence according to said input signal, and based on said input signal, obtaining an input field selected by said input signal and associated attribute data of an application scenario that is corresponding to the input field;
matching based on said input sequence and said associated attribute data, so as to obtain a candidate object wherein said candidate object is associated with one or more data fields and said one or more data fields are adapted to describe a target subject indicated by the candidate object and relevant information of an application scenario associated with the target subject.

2. The method according to claim 1, **characterized in that**, further comprises: when obtaining a candidate object, obtaining candidate words corresponding to said input sequence.

3. The method according to claim 2, **characterized in that**, further comprises: displaying said candidate objects and said candidate words at the same time.

4. The method according to claim 2, **characterized in that**, further comprises: sorting said target subject, indicated by the matched candidate object, according to the sorting of said corresponding candidate words.

5. The method according to claim 1, **characterized in that**, further comprises: said obtaining an input field selected by said input signal and associated attribute data of an application scenario that is corresponding to the input field based on said input signal, comprises: determining whether said input signal includes a selection of the input field; when said input signal includes a selection of the input field, obtaining the associated attribute data of the input field and the associated attribute data of its corresponding application scenario.

6. The method according to claim 1, **characterized in that**, said matching based on said input sequence and said associated attribute data comprises:
filtering in one or more first specified data fields of candidate objects based on said input sequence, so as to obtain one or more matched candidate objects, wherein said first specified data field of the matched candidate object is adapted to describe relevant information of the target subject indicated by the corresponding candidate object or of the application scenario associated with the corresponding candidate object;
filtering in the obtained candidate objects and excluding one or more candidate objects, wherein one or more second specified data fields of the excluded candidate object fail to match with said associated attribute data.

7. The method according to claim 1, **characterized in that**, said matching based on said input sequence and said associated attribute data comprises:
filtering in one or more third specified data fields according to said associated attribute data, so as to obtain one or more matched candidate objects, wherein said third specified data field of the matched candidate object is adapted to describe the relevant information of the target subject indicated by the corresponding candidate object or of the application scenario associated with the candidate object;
filtering in one or more matched candidate objects based on said input sequence.

8. The method according to claim 1, **characterized in that**, said matching based on said input sequence and said associated attribute data further comprises: reading out the contents, which are associated with a matched mode, of a matching mode field or other specified data fields of the candidate object, and performing a matching operation based on said matching mode.

9. The method according to claim 1, **characterized in that**, said obtaining an input sequence according to said input signal comprises: identifying the digit and/or letter associated with each key of an input area, and when it is detected that the input signal is a pressing on a specified key, adding the digit and/or letter associated with said key into the input sequence, and then updating the input sequence.

10. The method according to claim 1, **characterized in that**, further comprises: displaying target subject indicated by the matched candidate object in a specified display field.

11. An intelligent-predictable input method, comprising:
obtaining an input sequence according to a user's input;
searching for a matched candidate object in a database on a basis of said input sequence, wherein, said database comprises at least a candidate object associated with one or more data fields and said data fields are adapted to describe relevant information of a target subject indicated by the candidate object and of an application scenario associated with the target subject.

12. The method according to claim 11, **characterized in that**, said searching for a matched candidate object in a database on a basis of the input sequence further comprises: filtering, according to said input sequence, in one or more predetermined data fields of the candidate objects; obtaining a candidate object to be a matched candidate object when said input sequence conforms to the content of the predetermined data field of the candidate object.

13. The method according to claim 12, **characterized in that**, said searching for a matched candidate object in a database comprises:
obtaining, according to the input sequence, candidate words corresponding to said input sequence, while obtaining a candidate object.

14. The method according to claim 13, **characterized in that**, displaying said candidate objects and said candidate words at the same time.

15. The method according to claim 11, **characterized in that**, further comprises: determining whether said user's input includes a selection of the input field; when said user's input includes a selection of the input field, recording said user input and obtaining the input sequence associated with the user input.

16. The method according to claim 11, **characterized in that**, said searching for a matched candidate object further comprises: filtering, according to attribute data of the application scenario, in one or more obtained candidate objects matched with said input sequence and excluding one or more candidate objects, wherein one or more data fields of the excluded candidate object fail to match with said associated attribute data.

17. An intelligent-predictable input system, comprising:
an input device, for obtaining an input signal;
a storage module, for storing one or more candidate objects and one or more data fields associated thereto, wherein said one or more data fields are adapted to describe relevant information of a target subject indicated by the candidate object and relevant information of an application scenarios associated with the target subjects;
a processing module, for receiving the input signal from the input device, obtaining, according to said input signal, an input sequence, an input field selected by said input signal and associated attribute data of an application scenario that is corresponding to the input field, and then based on said input sequence and said associated attribute data, filtering in the storage module to obtain one or more matched candidate objects; and
a display device, for displaying the target subjects indicated by the matched candidate objects.

18. The system according to claim 17, **characterized in that**, said processing module comprises: obtaining, according to the input sequence, candidate words corresponding to said input sequence, while obtaining a candidate object.

19. The system according to claim 18, **characterized in that**, said display device displays said candidate objects and said candidate words at the same time.

20. The system according to claim 18, **characterized in that**, said processing module further comprises: sorting said target subject, indicated by the matched candidate object, according to the sorting of said corresponding candidate words.

21. The system according to claim 17, **characterized in that**, said processing module further comprises: determining whether said input signal includes a selection of the input field; when said input signal includes a selection of the input field, obtaining the associated attribute data of the input field and the associated attribute data of its corresponding application scenario.

22. The system according to claim 17, **characterized in that**, said processing module further comprises: filtering according to said input sequence, in one or more predetermined data fields of the candidate objects; obtaining a candidate object to be a matched candidate object when said input sequence conforms to the content of the predetermined data field of the candidate object.

23. The system according to claim 22, **characterized in that**, said processing module further comprises:
filtering in one or more first specified data fields of candidate objects based on said input sequence, so as to obtain one or more matched candidate objects, wherein said first specified data field of the matched candidate object is adapted to describe relevant information of the target subject indicated by the corresponding candidate object or of the application scenario associated with the corresponding candidate object;
filtering in the obtained candidate objects and excluding one or more candidate objects, wherein one or more second specified data fields of the excluded candidate object fail to match with said associated attribute data.

24. The system according to claim 22, **characterized in that**, said processing module further comprises:
filtering in one or more third specified data fields according to said associated attribute data, so as to obtain one or more matched candidate objects, wherein said third specified data field of the matched candidate object is adapted to describe the relevant information of the target subject indicated by the corresponding candidate object or of the application scenario associated with the candidate object;
filtering in the matched candidate objects based on said input sequence.

25. The system according to claim 17, **characterized in that**, said processing module further comprises: reading out the contents, which are associated with a matching mode, of a matching mode field or other specified data fields of the candidate object, and performing a matching operation based on said matching mode.

26. An intelligent-predictable input system, comprising:
an input device, for obtaining an input signal;
a processing module, for receiving the input signal from the input device and obtaining, according to said input signal, an input sequence and associated attribute data of an application scenario;
an interface, for sending the data obtained by the processing module and receiving one or more candidate objects matched with said input sequence and said associated attribute data, wherein, said candidate object comprises one or more data fields and said one or more data fields are adapted to describe relevant information of a target subject indicated by the candidate object and relevant information of an application scenarios associated with the target subjects.

27. The system according to claim 26, **characterized in that**, further comprises: a feedback device, for feeding back the target subjects indicated by said candidate objects.

28. The system according to claim 26, **characterized in that**, said processing module comprises when obtaining a candidate object, obtaining candidate words corresponding to said input sequence.

29. The system according to claim 28, **characterized in that**, said feedback device comprises: displaying said candidate objects and said candidate words at the same time.

30. The system according to claim 26, **characterized in that**, said processing module further comprises: sorting said target subject, indicated by the matched candidate object, according to the sorting of said corresponding candidate words.

31. The system according to claim 26, **characterized in that**, said processing module further comprises: determining whether said input signal includes a selection of the input field; when said input signal includes a selection of the input field, obtaining the associated attribute data of the input field and the associated attribute data of its corresponding application scenario.
